# EUROPEAN PATENT APPLICATION

(11) **EP 4 160 754 A1**
(43) Date of publication of application: **05.04.2023**
(21) Application number: 21814552.2
(22) Date of filing: 26.05.2021
(51) Int. Cl.: H01M 4/70, H01M 10/0585, H01M 10/48

(54) **SINGLE CELL UNIT**

(30) Priority: 26.05.2020 JP 2020091376
(71) Applicant: APB Corporation, Tokyo 101-0041 (JP)
(72) Inventor: HORIE, Hideaki, Tokyo 101-0041 (JP); KAWASAKI, Yohji, Kyoto-shi, Kyoto 605-0995 (JP); MIZUNO, Yusuke, Kyoto-shi, Kyoto 605-0995 (JP); SUENAGA, Takuya, Kyoto-shi, Kyoto 605-0995 (JP)
(74) Representative: Grünecker Patent- und Rechtsanwälte PartG mbB
(86) International application number: PCT/JP2021/020017
(87) International publication number: WO 2021/241637

(57) **Abstract**

The present disclosure provides a cell unit which has a configuration in which the electronic component can be arranged inside the cell while making effective use of the space other than the power generation region present in the cell, and also decrease in volume energy density due to a reduction in the power generation region can be prevented. A cell unit including a positive electrode current collector, a positive electrode active material layer, a separator, a negative electrode active material layer and a negative electrode current collector which are laminated on one another, the cell unit comprising a frame member arranged between the positive electrode current collector and an opposing negative electrode current collector and fixing a peripheral edge portion of the separator, and an electronic component for detecting the state inside the cell unit, wherein the electronic component is arranged in a region between the positive electrode current collector and the negative electrode current collector, and the electronic component arranged in the region is electrically connected to the positive electrode current collector and the negative electrode current collector.

## Description

### Technical Field

The present disclosure relates to a cell unit, and a lithium-ion battery module having an assembled battery in which the cell units are stacked.

### Background Art

A laminated battery composed of a plurality of laminated lithium-ion batteries (cells) has been used as a power supply of an electric vehicle, a hybrid vehicle, and the like. A lithium-ion battery generally has the configuration in which a positive electrode current collector, a positive electrode active material layer, a separator, a negative electrode active material layer, and a negative electrode current collector are laminated on one another in this order.

For example, Patent Literature 1 discloses a configuration of a sheet-shaped lithium-ion battery having a notch in which an IC chip (integrated circuit) is arranged in the notched portion, and a lithium-ion battery is used as a power supply for the IC chip. Specifically, Patent Literature 1 discloses a configuration in which the lithium-ion battery is configured to have a hollow structure in its planar shape, or a lithium-ion battery is configured to be formed in an L-shape or a U-shape and an IC chip is arranged in a recessed notch, so that the IC chip and the battery is electrically connected.

### Citation List

### Patent Literature

PTL: Japanese Unexamined Patent Application, First Publication No. H11-338998

### Summary of Invention

The lithium-ion battery is expected to be used not only for electric vehicles or the like, but also for large-scale energy storage systems for natural energy such as solar and wind power generation. One of the requirements for batteries used in such energy storage systems is a high energy density. However, if the configuration as in the above-described Patent Literature 1 is employed in which a notch is formed in the main body part (including active material layer, etc.) of the lithium-ion battery as a space for arranging the IC chip, the power generation density per unit volume of the battery becomes smaller, or in other words, the ratio of active material in the battery becomes lower, which may limit high energy density. In particular, when a laminated battery is used which is composed of a plurality of laminated cells with a structure having a notch formed therein (the hollow structure, L-shape or U-shape, etc., described above) as in the Patent Document 1, it is difficult to improve the volumetric energy density of the laminated battery. Patent Literature 1 discloses the feature of forming a notch (the hollow structure, L-shape or U-shape, etc., described above) in the lithium-ion main body part to arrange the IC chip in the notched portion, however, does not disclose at all as to the feature of arranging the IC chip while making effective use of an unused space other than a power generation region present in the cell, or the feature of arranging the IC chip while preventing decrease in volume energy density.

The object of the present disclosure is to provide a cell unit which has a configuration in which the electronic component can be arranged inside the cell while making effective use of the space other than the power generation region present in the cell, and also decrease in volume energy density due to a reduction in the power generation region can be prevented.

In an aspect of the present disclosure, a cell unit includes a positive electrode current collector, a positive electrode active material layer, a separator, a negative electrode active material layer and a negative electrode current collector which are laminated on one another, the cell unit comprising a frame member arranged between the positive electrode current collector and an opposing negative electrode current collector and fixing a peripheral edge portion of the separator, and an electronic component for detecting the state inside the cell unit, wherein the electronic component is arranged in a region between the positive electrode current collector and the negative electrode current collector, and the electronic component arranged in the region is electrically connected to the positive electrode current collector and the negative electrode current collector.

In the present disclosure, making effective use of the space other than the power generation region present in the cell, decrease in volume energy density due to a reduction in the power generation region can be prevented

### Brief Description of Drawings

[FIG. 1] FIG. 1 is a perspective view of a cell unit according to one aspect of the present disclosure.
[FIG. 2] FIG. 2 is an exploded perspective view of a cell unit according to one aspect of the present disclosure.
[FIG. 3] FIG. 3 is a perspective view of an electronic component of a cell unit according to one aspect of the present disclosure.
[FIG. 4] FIG. 4 is a view as seen from a IV arrow direction of the cell unit in FIG. 1.
[FIG. 5] FIG. 5 is a partially cutaway perspective view schematically showing a lithium-ion battery module in which cell units according to an embodiment of the present disclosure are laminated.

### Description of Embodiments

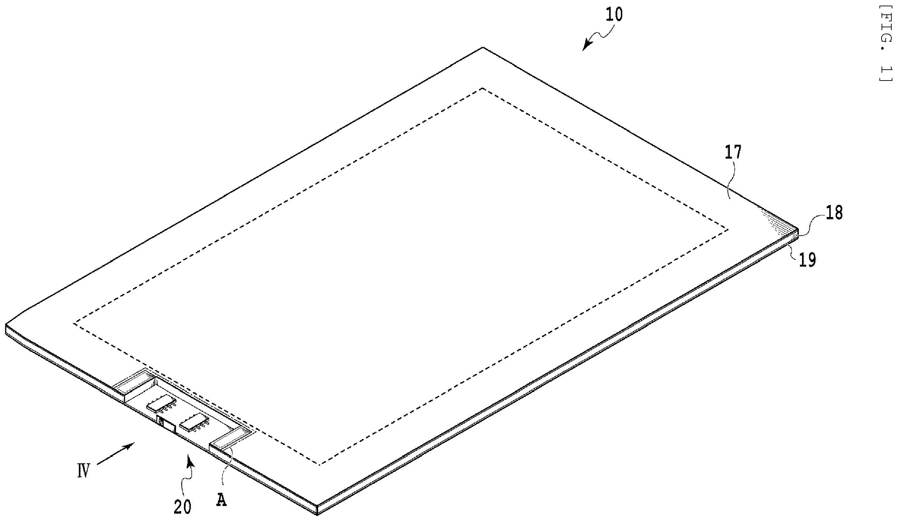

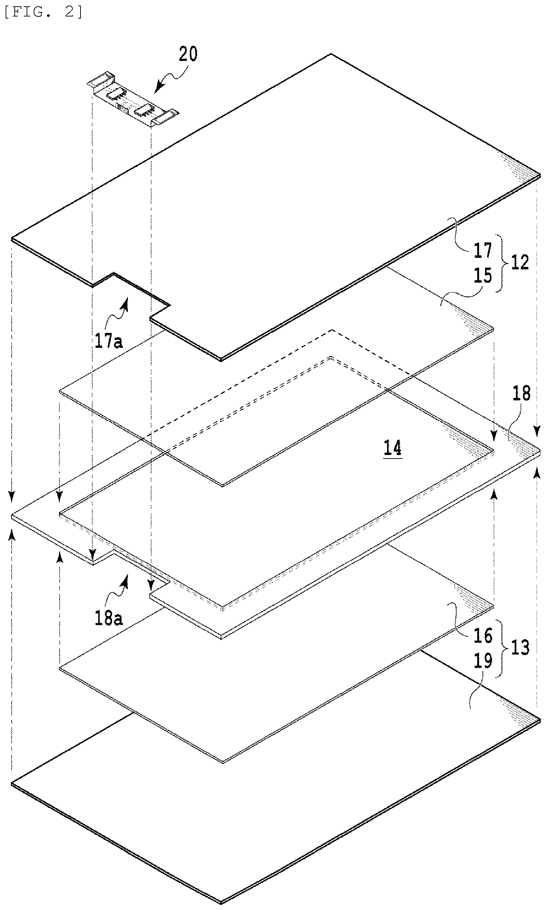

FIG. 1 is a perspective view of a cell unit according to one aspect of the present disclosure. Further, FIG. 2 is an exploded perspective view of a cell unit according to one aspect of the present disclosure. The cell unit 10 includes a positive electrode current collector 17, a positive electrode active material layer 15, a separator 14, a negative electrode active material layer 16, and a negative electrode current collector 19 which are laminated on one another.

As shown in FIG. 2, the cell unit 10 has the positive electrode current collector 17, the positive electrode active material layer 15, the separator 14, the negative electrode active material layer 16, and the negative electrode current collector 19 which are laminated in this order from the upside. Further, the cell unit 10 is formed by laminating a positive electrode 12 in which the positive electrode active material layer 15 is formed on the surface of the positive electrode current collector 17 having a substantially rectangular flat plate shape and a negative electrode 13 in which the negative electrode active material layer 16 is formed on the negative electrode current collector 19 having a similarly substantially rectangular flat plate shape with the separator 14 having a a similarly substantially rectangular flat plate shape interposed therebetween.

The cell unit 10 includes an annular frame member 18 disposed between the positive electrode current collector 17 and the negative electrode current collector 19.

In the frame member 18, the separator 14 is arranged inside the frame to fix the peripheral edge portion of the separator 14 between the positive electrode current collector 17 and the negative electrode current collector 19. Further, the frame member 18 is arranged annually so as to surround the outer peripheries of the positive electrode active material layer 15 and the negative electrode active material layer 16 and the outer periphery of the separator 14. The positive electrode current collector 17, the negative electrode current collector 19, and the frame member 18 seal the positive electrode active material layer 15, the separator 14, and the negative electrode active material layer 16.

In an aspect of the present disclosure, the positive electrode current collector 17 and the negative electrode current collector 19 preferably exhibit the outer edge shapes different from each other. For example, a notch is formed in the peripheral edge portion of the positive electrode current collector 17 or the negative electrode current collector 19. In this embodiment, a rectangular notch 17a is formed on the positive electrode current collector 17, and the negative electrode current collector 19 does not have any notch. Hereinafter, the description will be made as to the aspect where the notch is formed of the positive electrode current collector 17, and the description will be omitted as to the aspect where the notch is provided on the negative electrode current collector 19. The case where the notch is provided on the negative electrode current collector 19 can be understood as an aspect described below in which the positive electrode current collector and the negative electrode current collector are replaced, and the aspect concerned is included as an aspect of this embodiment.

Further, in the frame member 18, a rectangular notch 18a may be formed. The notch 17a of the positive electrode current collector 17 and the notch 18a of the frame member 18 at least partially overlap each other, and a region A is provided in the lamination direction for arranging an electronic component 20. Preferably, the notch 17a of the positive electrode current collector 17 and the notch 18a of the frame member 18 are formed in the same position when viewed in the lamination direction. In this manner, each of the notches (the notch 17a and the notch 18a) is formed in the same position, so that the electronic component can be installed from one direction (in this embodiment, the direction when viewing the positive electrode collector 17 in the direction of the positive electrode collector 17 toward the negative electrode collector 19 in the laminated direction), whereby enabling simplicity on manufacturing processes to be secured at the time of installing the electronic component. Further, the notch 17a of the positive electrode current collector 17 and the notch 18a of the frame member 18 may have the same shape or different shapes. Preferably, the notch 17a of the positive electrode current collector 17 and the notch 18a of the frame member 18 have the same shape. The same shape make it possible to form the notch 17a of the positive electrode current collector 17 and the notch 18a of the frame member 18 with simple manufacturing processes.

The positive electrode current collector 17 and the negative electrode current collector 19 are arranged opposite each other with a predetermined spacing by the frame member 18. Further, the separator 14, and the positive electrode active material layer 15 and the negative electrode active material layer 16 are arranged opposite each other with a predetermined spacing by the frame member 18.

The spacing between the positive electrode current collector 17 and the separator 14 is adjusted in accordance with the thickness of the active material layer of the lithium-ion battery. The spacing between the negative electrode current collector 19 and the separator 14 is similarly adjusted in accordance with the thickness of the active material layer of the lithium-ion battery. The positional relation of the positive electrode current collector 17, the negative electrode current collector 19, and the separator 14 is defined to obtain a necessary spacing.

The electronic component 20 is arranged in a region between the positive electrode current collector 17 and the negative electrode current collector 19; in this embodiment, for example, it is arranged in a region defined by the notch 17a of the positive electrode current collector 17, the notch 18a of the frame member 18, and the negative electrode current collector 19, and the region is include herein in "the region between the positive electrode current collector and the negative electrode current collector". In addition, the region between the positive electrode current collector 17 and the negative electrode current collector 19 in this disclosure is not limited to the illustrated example. The region means the interior of a virtual rectangular parallelepiped when considering the virtual rectangular parallelepiped of minimum volume surrounding a cell, assuming that the cell unit (cell) has a substantially rectangular shape. More specifically, the electronic component 20 in this embodiment can be arranged inside the virtual rectangular parallelepiped with the minimum volume surrounding such a cell. Since the inside of the cell unit according to this embodiment includes a space other than the power generation region (the region that does not contribute to power generation), considering the presence of the space, the electronic component 20 is arranged in the region between the positive electrode current collector 17 and the negative electrode current collector 19 (the interior of a virtual rectangular parallelepiped of minimum volume surrounding the cell) (suitably, arranged between an outer peripheral portion of the positive electrode current collector 17 and an outer peripheral portion of the negative electrode current collector 19), so that the electronic component can be arranged inside the cell while making effective use of the space other than the power generation region present in the cell. Also, the electronic component 20 is arranged in the region between the positive electrode current collector 17 and the negative electrode current collector 19, so that it is possible to prevent decrease in volume energy density. In particular, in a case of using the cell unit according to this embodiment as a laminated battery (assembled battery), it is preferable because the volume energy density of the laminated battery can be improved. While not shown in figure, the electronic component 20 also can be arranged in a sandwiched space between the positive electrode current collector 17 and the negative electrode current collector 19, for example, and the space concerned is also included in the region between the positive electrode current collector 17 and the negative electrode current collector 19 in the present disclosure. Further, the electronic component 20 in this embodiment may be arranged inside the frame member 18 (embedded and arranged inside the frame member 18), and also such an aspect is included in the aspect in which the electronic component is arranged in the region between the positive electrode current collector and the negative electrode current collector.

In this embodiment, the notch is formed in the cell unit 10 to arrange the electronic component, the region that contributes to the power generation of the cell unit 10 assuming that the notch is not formed in the cell unit 10 and the region that contributes to the power generation of the cell unit 10 assuming that the notch is formed in the cell unit 10 are substantively the same. In general, when the region of a lithium-ion battery that includes the active material layer (the region that contributes to power generation (power generation region)) is reduced, the ratio of the active material in the battery may decrease, resulting in decrease in the volumetric energy density. In this embodiment, even if a notch is formed in cell unit 10, the region that contributes to power generation does not substantially decrease, so that the reduction in volumetric energy density is prevented. As a result, even if the electronic component of this embodiment is arranged inside the cell unit 10, it is possible to prevent decrease in the volumetric energy density. In other words, the electronic component can be arranged inside the cell unit 10 while making effective use of the space outside the power generation region that exists inside cell unit 10.

The electronic component 20 is electrically connected to the positive electrode current collector 17 and the negative electrode current collector 19, and preferably detects the state of the cell unit 10. The electronic component 20 is an electronic component for detecting the state inside the cell.

For example, it is preferable to be a sensor that measures temperature, voltage, current, or acoustic emission at a predetermined portion in the cell. It is also preferable that the electronic component can wirelessly output a signal indicating the state inside the cell to the outside of the cell.

The electronic component 20 which is a sensor can detect the state inside the cell, and the electronic component which can carry out the output wirelessly can wirelessly output a signal indicating the detected state and the measurement result can be received outside the battery. It is possible to know the state inside the cell without dismantling the cell.

It is possible to detect local temperature rises, increase in current, voltage drop, or the like by measuring the temperature, voltage, or current within the cell that are caused by short-circuits or other defects within the cell.

It is also possible to detect damage or deformation in the battery by measuring acoustic emissions.

Passive and active elements can be used as electronic component 20; as those elements, any elements such as a capacitor, an inductor, a resistor, a transistor, a diode, an IC, an LSI, or the like can be used.

Further, in the case of an electronic component that can wirelessly output, the electronic component may be an antenna, a filter, an amplifier, an oscillator, or the like, or may be a wireless communication module in which these parts are modularized, or a sensor integrated type module.

Further, a switch that switches whether or not the state inside the cell is detected by the electronic component 20 arranged in the frame member 18 may be provided so as to detect the state inside the cell by switching the switch when a signal is given from the outside.

The state inside the cell is detected only when a signal is given from the outside, so that the power consumption by the electronic component 20 can be suppressed.

In the case of the above configuration, the electronic component 20 is preferably provide with an antenna element for receiving signals from the outside. Examples of the signal from the outside include a signal to command detection of the state inside the cell, a signal to command to stop detecting the state inside the cell, and the like.

The electronic component 20 is electrically connected to the negative electrode current collector 19 and the positive electrode current collector 17, and preferably can receive power supplied from a lithium-ion battery.

The electronic component 20 that is electrically connected to the negative electrode current collector 19 and the positive electrode current collector 17 can operate by receiving power supplied from the lithium-ion battery. A power supply and wiring are not necessary to be provided for operating the electronic component 20, so that the simple configuration can be achieved.

Further, in a case where the electronic component 20 is electrically connected to the negative electrode current collector 19 and the positive electrode current collector 17, it is preferable that the negative electrode current collector 19 and the positive electrode current collector 17 are resin current collectors, and the negative electrode current collector 19 and the positive electrode current collector 17 are directly bonded and electrically connected to the electronic component 20.

In a case of using a resin current collector, the resin current collector and the electronic component can be directly bonded by bringing the electrodes of the resin current collector and the electronic component into contact and heating the resin current collector to soften the resin. More specifically, a resin current collector is used, so that an electrical connection can be made without any other bonding material, such as anisotropic conductive film (ACF), between the current collector and the electronic component.

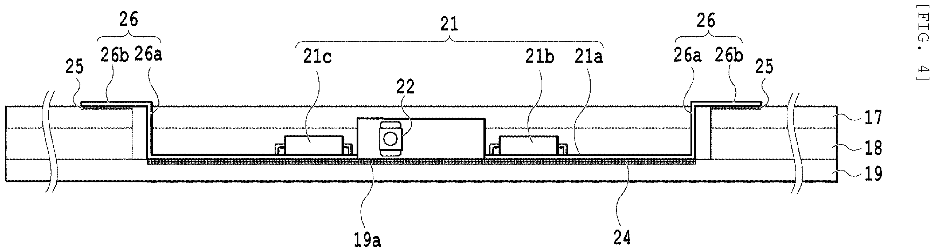

FIG. 4, which will be described later, shows that external electrodes of the electronic component 20 provided inside the frame member 18 are in contact with the positive electrode current collector 17 and the negative electrode current collector 19. More specifically, the electronic component 20, and the positive electrode current collector 17 and negative electrode current collector 19 are electrically connected.

Further, the electronic component 20 arranged inside the frame member 18 may be a light-emitting element that outputs an optical signal. Preferably,
In a case where a light-emitting element 22 described below is arranged inside the frame member 18, it is preferable that the light-emitting element 22 embedded inside the frame member so as to be exposed on the side of the frame member 18 so that the light from the of the light-emitting element 22 is directed outside the cell.

It is preferred that the electronic components 20 are arranged at a plurality of locations inside the frame member 18 provided in the outer periphery of the cell so that the state at different portions in the cell can be detected individually.

An indicator showing the state inside the cell is detected for each of the electronic components 20, and when an abnormal value is found only in the indicator obtained from a specific electronic component, it is possible to estimate that a defect has occurred in the vicinity of the electronic component concerned.

More specifically, the cause of defects in the cell can be easily identified.

The number of the electronic components provided in the frame member of the cell is not particularly limited, and can be set arbitrarily considering the size of the cell, the size of the frame member, the size of the electronic component, and the like.

Further, in a case where the electronic components are provided at a plurality of locations within the frame member, the types of the electronic components may all be the same, or different types of electronic components may be combined.

The positive electrode active material layer 15 includes positive electrode active material. Examples of the positive electrode active material of this embodiment include composite oxide of lithium and transition metal {composite oxide containing one transition metal (LiCoO₂, LiNiO₂, LiAlMnO₄, LiMnO₂, LiMn₂O₄, and the like), composite oxide containing two transition metal elements (such as LiFeMnO₄, LiNi₁-xCoxO₂, LiMn₁-yCoyO₂, LiNi₁/₃Co₁/₃Al₁/₃O₂, and LiNi_{0.8}Co_{0.15}Al_{0.05}O₂) and composite oxide containing three transition metal elements [such as LiMaM'bM" cO₂ (M, M' and M" are different transition metal elements and satisfy a+b+c=1; such as LiNi₁/₃Mn₁/₃Co₁/₃O₂), etc.]etc.}, lithium-containing transition metal phosphate (such as LiFePO₄, LiCoPO₄, LiMnPO₄, and LiNiPO₄), transition metal oxide (such as MnO₂ and V₂O₅), transition metal sulfide (such as MoS₂ and TiS₂), conductive polymers (such as polyaniline, polypyrrole, polythiophene, polyacetylene and poly-p-phenylene and polyvinylcarbazole), and the like, and two or more types thereof may be used in combination. Lithium-containing transition metal phosphate may be those which a portion of the transition metal site is replaced with another transition metal.

The positive electrode active material 15 is preferably a coated positive electrode active material that is coated with a conductive auxiliary agent and a coating resin. Thus, the positive electrode active material is surrounded by being covered with a coating resin, and therefore the volume change of the electrode can be alleviated and the expansion of the electrode can be suppressed.

Examples of the conductive auxiliary agents include metal-based conductive auxiliary agents [aluminum, stainless steel (SUS), silver, gold, copper, titanium, and the like], carbon-based conductive auxiliary agents [graphite and carbon black (acetylene black, Ketchen black, furnace black, channel black and thermal lamp black, and the like), and mixtures thereof.

One kind of these conductive auxiliary agents may be used alone, or two or more kinds thereof may be used in combination. Moreover, an alloy or metal oxide thereof may be used. Of these, from the viewpoint of electrical stability, aluminum, stainless steel, silver, gold, copper, titanium, carbon-based conductive auxiliary agent or a mixture thereof is preferable; silver, gold, aluminum, stainless steel, or carbon-based conductive auxiliary agent is more preferable; and carbon-based conductive auxiliary agent is still more preferable. Further, these conductive auxiliary agents may be those obtained by coating a conductive material around a particle-based ceramic material or a resin material with plating or the like.

The shape of the conductive auxiliary agent is not limited to the particle form, may be a form other than the particle form, and may be a form practically applied as a so-called filler-based conductive auxiliary agent such as carbon nanofibers, carbon nanotubes, etc.

The ratio of the coating resin to the conductive auxiliary agent is not particularly limited; however, from the viewpoints of the internal resistance of the battery and the like, the ratio of the coating resin (in terms of resin solid content weight) and the conductive auxiliary agent is preferably 1:0.01 to 1:50, and more preferably 1:0.2 to 1:3.0 in terms of weight ratio.

Further, the positive electrode active material layer may contain another conductive auxiliary agent in addition to the conductive auxiliary agent contained in the coated positive electrode active material. As the conductive auxiliary agent, the same one as the above-described conductive auxiliary agent contained in the coated positive electrode active material can be used.

The positive electrode active material layer contains a positive electrode active material, and is preferably a non-bound body that does not contain a binding material that binds positive electrode active materials to each other.

Here, the non-bound body means that the position of the positive electrode active material is not fixed by a binding material (also referred to as a binder), and the positive electrode active materials, as well as the positive electrode active material and the current collector are not irreversibly fixed to each other.

The thickness of the positive electrode active material layer is not particularly limited; however, it is preferably 150 to 600 µm and more preferably 200 to 450 µm from the viewpoint of battery performance.

The negative electrode active material layer contains a negative electrode active material. As the negative electrode active material, a known negative electrode active material for lithium ion batteries can be used. Examples thereof include a carbon-based material [graphite, non-graphitizable carbon, amorphous carbon, a resin sintered product (for example, a sintered product obtained by sintering and carbonizing a phenol resin, a furan resin, or the like), cokes (for example, a pitch coke, a needle coke, and a petroleum coke), a carbon fiber, or the like], a silicon-based material [silicon, silicon oxide (SiOx), a silicon-carbon composite body (a composite body obtained by coating surfaces of carbon particles with silicon and/or silicon carbide, a composite body obtained by coating surfaces of silicon particles or silicon oxide particles with carbon and/or silicon carbide, silicon carbide, or the like), a silicon alloy (a silicon-aluminum alloy, a silicon-lithium alloy, a silicon-nickel alloy, a silicon-iron alloy, a silicon-titanium alloy, a silicon-manganese alloy, a silicon-copper alloy, a silicon-tin alloy, or the like), or the like], a conductive macromolecule (for example, polyacetylene or polypyrrole), a metal (tin, aluminum, zirconium, titanium, or the like), a metal oxide (a titanium oxide, a lithium-titanium oxide, or the like), a metal alloy (for example, a lithium-tin alloy, a lithium-aluminum alloy, or a lithium-aluminum-manganese alloy), or the like, and a mixture of the above and a carbon-based material.

Further, the negative electrode active material may be a coated negative electrode active material coated with the same conductive auxiliary agent and coating resin as those of the above-described coated positive electrode active material. As the conductive auxiliary agent and the coating resin, the same conductive auxiliary agent and coating resin as those of the above-described coated positive electrode active material can be suitably used.

Further, the negative electrode active material layer may contain another conductive auxiliary agent in addition to the conductive auxiliary agent contained in the coated negative electrode active material. As the conductive auxiliary agent, the same one as the above-described conductive auxiliary agent contained in the coated positive electrode active material can be used.

Similarly to the positive electrode active material layer, the negative electrode active material layer contains a positive electrode active material, and is preferably a non-bound body that does not contain a binding material that binds positive electrode active materials to each other. Further, similarly to the positive electrode active material layer, an adhesive resin may be contained. The thickness of the negative electrode active material layer is not particularly limited; however, it is preferably 150 to 600 µm and more preferably 200 to 450 µm from the viewpoint of battery performance.

Examples of the material constituting the positive electrode current collector and the negative electrode current collector include metal materials such as copper, aluminum, titanium, stainless steel, nickel and their alloys, as well as calcined carbon, conductive polymer materials, conductive glass, etc. Among these materials, from the viewpoint of weight reduction, corrosion resistance, and high conductivity, the positive electrode current collector is preferably aluminum, and the negative electrode current collector is preferably copper.

The current collector is preferably a resin current collector consisting of a conductive polymer material. The shape of the current collector is not particularly limited, and the current collector may be a sheet-shaped current collector consisting of an above-described material or a deposited layer consisting of fine particles consisting of an above-described material. The thickness of the current collector is not particularly limited; however, it is preferably 50 to 500 µm.

As the conductive macromolecule material constituting the resin current collector, it is possible to use, for example, a conductive polymer or a material obtained by adding a conducting agent to a resin, as necessary. As the conducting auxiliary agent constituting the conductive polymer material, the same one as the above-described conductive auxiliary agent contained in the coated positive electrode active material can be suitably used.

Examples of the resin constituting the conductive macromolecule material include polyethylene (PE), polypropylene (PP), polymethylpentene (PMP), polycycloolefin (PCO), polyethylene terephthalate (PET), polyether nitrile (PEN), polytetrafluoroethylene (PTFE), styrene butadiene rubber (SBR), polyacrylonitrile (PAN), polymethylacrylate (PMA), polymethylmethacrylate (PMMA), polyvinylidene fluoride (PVdF), an epoxy resin, a silicone resin, and a mixture thereof. Further, the resin constituting the conductive polymer material is preferably polyethylene (PE), polypropylene (PP), polymethylpentene (PMP), and polycycloolefin (PCO), and more preferably polyethylene (PE), polypropylene (PP), or polymethylpentene (PMP).

Examples of the separator include, for example, known separators for a lithium ion battery, such as a porous film consisting of polyethylene or polypropylene, a lamination film of a porous polyethylene film and a porous polypropylene, a non-woven fabric consisting of a synthetic fiber (a polyester fiber, an aramid fiber, or the like), a glass fiber, or the like and those above of which the surface is attached with ceramic fine particles such as silica, alumina, or titania.

The positive electrode active material layer and the negative electrode active material layer contain an electrolytic solution. As the electrolytic solution, a known electrolytic solution containing an electrolye and a non-aqueous solvent, which is used in the manfufacturing of the known lithium ion battery, can be used.

As the electrolyte, an electrolyte that is used in a known electrolytic solution can be used. Examples thereof include lithium salts of inorganic acids, such as LiN(FSO₂)₂, LiPF₆, LiBF₄, LiSbF₆, LiAsF₆, and LiClO₄; and lithium salts of organic acids, such as LiN(CF₃SO₂)₂, LiN(C₂F₅SO₂)₂, and LiC(CF₃SO₂)₃. Among these, an imide-based electrolyte [LiN(FSO₂)₂, LiN(CF₃SO₂)₂, LiN(C₂F₅SO₂)₂, or the like] or LiPF₆ is preferable from the viewpoints of battery output and charging and discharging cycle characteristics.

As the non-aqueous solvent, a non-aqueous solvent that is used in the known electrolytic solution can be used, and for example, a lactone compound, a cyclic or chain-like carbonic acid ester, a chain-like carboxylic acid ester, a cyclic or chain-like ether, a phosphoric acid ester, a nitrile compound, an amide compound, a sulfone, or a sulfolane, or a mixture thereof can be used.

The electrolyte concentration of the electrolytic solution is preferably 1 to 5 mol/L, more preferably 1.5 to 4 mol/L, and still more preferably 2 to 3 mol/L. The electrolyte concentration of the electrolytic solution can be checked by extracting the electrode for a lithium ion battery or the electrolytic solution constituting a lithium ion battery without using a solvent or the like and measuring the concentration thereof.

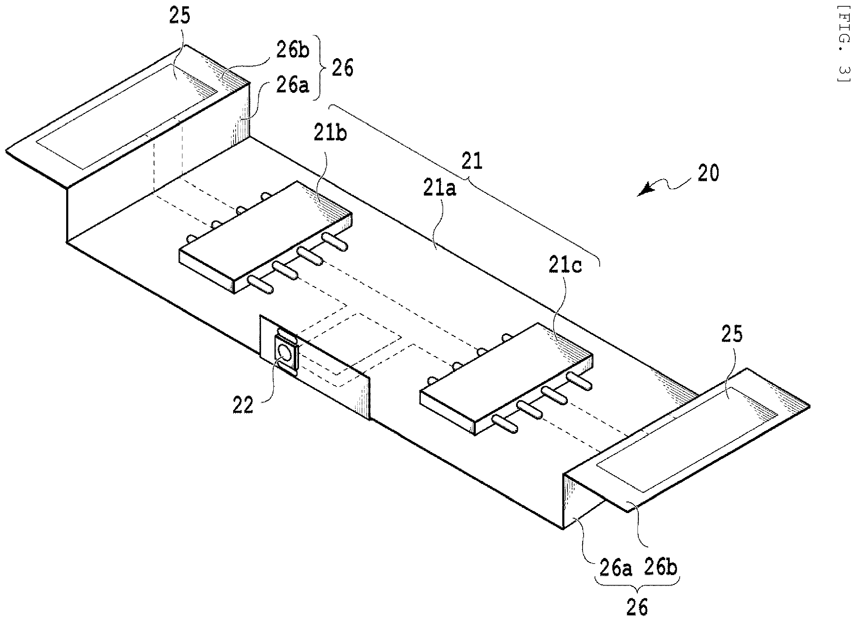

Next, FIG. 3 is a perspective view of the electronic component 20 of the cell unit according to one aspect of the present disclosure. FIG. 4 is a view as seen from a IV arrow direction of the cell unit in FIG. 1. The cell unit 10 has the electronic component 20 that detects the state inside the cell unit. The electronic component 20 is provided with a wiring board 21a, a main body portion 21 having integrated circuits 21b, 21c arranged on the wiring board 21a, and connection parts 26 located on both sides of the light-emitting element 22 and the main body portion 21.

In this embodiment, the electronic component 20 is disposed inside the notch 17a of the positive electrode current collector 17 and the notch 18a of the frame member 18 described above, and also is mounted on the surface of the negative electrode current collector 19. In another embodiment, in a case where the negative electrode current collector 19 is provided with a notch, the electronic component 20 is mounted on the face of the positive electrode current collector 17.

The main body portion 21 is provided with a measurement terminal 24 on the opposite surface from the integrated circuits 21b and 21c. Further, the main body portion 21 is mounted on an exposed surface 19a of the positive electrode current collector 17 or the negative electrode current collector 19, which is exposed by the formation of the notch 17a and 18a, in the plan view of the cell unit 10.

The integrated circuits 21b and 21c perform control of the light-emitting element 22 such as the control of light emission of optical signals and light signal patterns. The integrated circuits 21b and 21c perform conversion into an optical signal pattern based on the cell voltage and transfer it to the light-emitting element 22. The integrated circuits 21b and 21c use arbitrary semiconductors such as ICs and LSIs. In this embodiment, two integrated circuits are implemented, however, the number thereof is not limited to this, and may be one or three or more.

The light-emitting element 22 outputs an optical signal based on the state of the cell unit 10 detected by the integrated circuits 21b and 21c. The optical signal is then received by a light receiving portion 80, which will be described later.

The connection portion 26 is provided with a first portion 26a extending in the lamination direction of the cell and a second portion 26b connected to the first portion 26a and extending in the planar direction of the cell. Further, the second portion 26b comes into contact with the surface of the positive electrode current collector 17 to make conductive connection between the electronic component 20 and the current collector. Further, the connecting portion 26 is provided with a measurement terminal 25 so as to bring into contact with the surface of the current collector. As a result, it is possible to come into contact with the second portion 26b of the connecting portion 26, and thus the measurement terminal 25 can connect to the positive electrode current collector 17.

The electronic components 20 are disposed along the outer edge of the positive electrode current collector 17 or the negative electrode collector 19 without protruding from the outer edge of the positive electrode current collector 17 or the negative electrode current collector 19 outward in the surface direction when viewed the cell unit 10 in plan view. In this embodiment, the electronic components 20 are disposed along the outer edge of the negative electrode current collector 19 without protruding outward from the outer edge of the negative electrode current collector 19 outward in the surface direction. This allows the electronic components 20 to be arranged without protruding from the outer edge of the current collector.

Thus, the electronic component 20 can measure the voltage across the positive electrode 12 and the negative electrode 13 in the cell unit 10 and the temperature inside the cell unit 10.

As shown in FIG. 4, the measurement terminal 24 is thermo-compression bonded to the negative electrode current collector 19. The measurement terminal 25 is thermo-compression bonded to the positive electrode collector 17. Thus, the measurement terminal and each of the current collector are thermo-compression bonded, so that the electronic component 20 can be fixed to the cell unit 10.

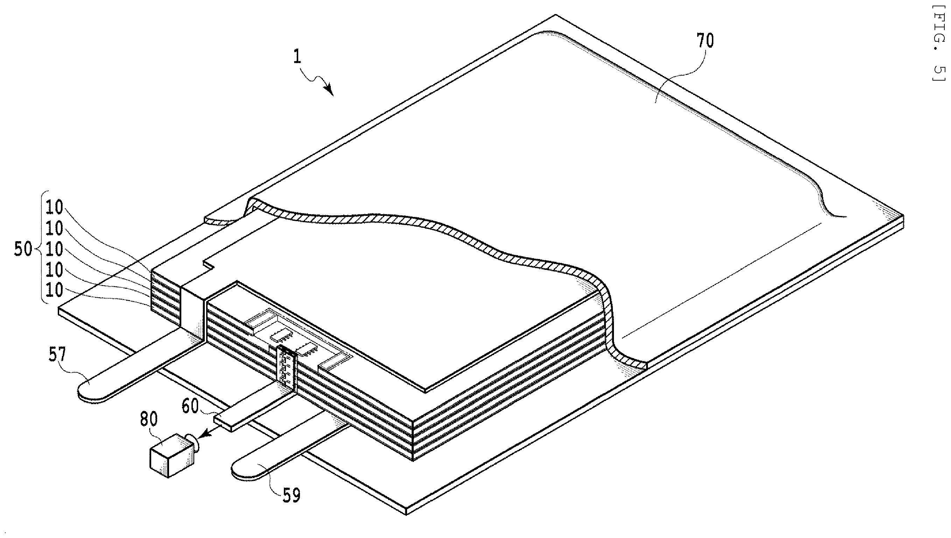

FIG. 5 is a partially cutaway perspective view schematically showing a lithium-ion battery module in which cell units according to this embodiment are laminated. FIG. 5 shows an example of a lithium-ion battery module in which the cell units 10 are laminated. A lithium-ion battery module 1 is provided with an assembled battery 50 with a plurality of laminated cell units 10, an optical waveguide 60, and an outer package 70. A light receiving portion 80 is provided at one end of the optical waveguide 60. A lithium-ion battery (cell unit) herein refers to a secondary battery that utilizes lithium ions as charge carriers and is charged and discharged by the transfer of lithium ions between positive and negative electrodes. The lithium-ion battery (secondary battery) includes a battery that uses a liquid material as an electrolyte, and includes a battery that uses a solid material as an electrolyte (a so-called all-solid-state battery). The lithium-ion battery in this embodiment also includes a battery having a metal foil as a current collector (metal current-collecting foil), and includes a battery having a so-called resin current collector, which is composed of resin with conductive material added in place of the metal foil. In a case where the resin current collector is used as a resin current collector for a bipolar electrode as described below, a bipolar electrode may be constituted by forming a positive electrode on one side of the resin current collector and a negative electrode on the other side thereof. The lithium-ion battery in this embodiment includes those which have electrodes constituted by applying a positive electrode or negative electrode active material to a current collector for a positive electrode or negative electrode, respectively, using a binder, and in a case of a bipolar battery, those which constitutes a bipolar electrode having a positive electrode layer formed by applying a positive electrode active material to one side of the current collector using a binder, and a negative electrode layer formed by coating a negative electrode active material on the opposite side using a binder.

The assembled battery 50 (laminated battery) consists of a plurality of laminated cell units 10. In this embodiment, five single cell units 10 are laminated, and the upper surface of the negative electrode current collector 19 and the lower surface of the positive electrode current collector 17 of adjacent cell units 10 are laminated so as to be adjacent to each other. In this case, the cell units 10 are connected in series. As described above, the laminated battery according to this embodiment includes a plurality of laminated cell units 10 connected in series, however, those which a plurality of planar batteries (cell units) is laminated so as to be in physical contact with each other without electrical connection are also included. Moreover, the current collector described above can also be used as a resin current collector for a bipolar electrode in which a positive electrode is formed on one surface of the current collector and a negative electrode is formed on the other surface of the current collector. Therefore, the laminated battery according to this embodiment includes a laminate (bipolar battery) in which a positive electrode is formed on one surface of a current collector (resin current collector for a bipolar electrode) and a negative electrode is formed on the other surface to form a bipolar electrode, and the bipolar electrode is laminated with a separator. The electronic components 20 of each of the cell units 10 are aligned in a row on the outer surface of the assembled battery 50. Preferably, the optical waveguide 60 may be provided so as to cover the electronic components 20 aligned in a row.

In this embodiment, the notch formed in one cell unit 10 in the assembled battery and the notch formed in the cell unit adjacent to the one cell unit are formed at the same position when viewed in the lamination direction of the cell units 10. The electronic component is arranged in the notch formed at such a position. More specifically, the electronic component 20 provided in one cell unit 10 in the assembled battery and the electronic component provided in the cell unit adjacent to one cell unit are formed at the same position when viewed in the lamination direction of the cell units 10. In this manner, the configuration in which the electronic components can be installed in the notches formed at the same position makes it possible to ensure the simplicity of the manufacturing process when installing the electronic components.

The optical waveguide 60 is provided so as to cover the light emitting surface of the light-emitting element 22 that outputs an optical signal of a plurality of electronic components (including the electronic component 20 provided in one cell unit 10 and the electronic component provided in a cell unit adjacent to the one cell unit, for example). The configuration of covering the light emitting surface by the optical waveguide 60 allows the optical signal to be introduced inside the optical waveguide 60 even if a slight positional deviation occurs between the optical waveguide 60 and the light-emitting element 22 when the optical waveguide 60 is installed. Such a configuration makes it possible to increase the positional deviation tolerance of the optical waveguide 60. Further, the light receiving portion 80 is arranged at one end of the optical waveguide 60. Thereby, the optical signal introduced into the optical waveguide 60 can be received by the light receiving section 80.

The assembled battery 50 and the light receiving portion 80 are electrically insulated. As a result, the state of the assembled battery can be managed without connecting each cell and metal wiring as in the conventional art. Also, the light receiving portion 80 receives optical signals generated from a plurality of cell units 10 of the assembled battery 50. A battery state analyzer is electrically connected to the light receiving portion 80. The battery state analyzer analyzes the received optical signal and analyzes the characteristics of the single cells included in the assembled battery.

The outer package 70 accommodates the assembled battery 50 and the optical waveguide 60. Further, in the present embodiment, a polymer-metal composite film or the like is used as a member of the outer package 70, however, the material is not limited to this. Furthermore, the outer package 70 accommodates the optical waveguide 60 so that one end thereof protrudes outside the outer package 70. This allows the optical signal from each of the cell units 10 of the assembled battery 50 to be introduced into the optical waveguide 60, and therefore the optical signal can be received by the light receiving portion 80.

A conductive sheet is provided under the negative electrode current collector 19 on the lowermost surface of the battery assembly 50, and a part of the conductive sheet is pulled out of the outer package 70 to serve as a lead-out wiring 59. Further, a conductive sheet is provided on the positive electrode current collector 17 on the uppermost surface of the battery 50, and a part of the conductive sheet is pulled out from the outer package 70 to serve as a lead-out wiring 57. The conductive sheet is not particularly limited as long as it is a material having conductivity, and a metal material such as copper, aluminum, titanium, stainless steel, nickel, or an alloy thereof, or a material described as the resin current collector can be appropriately selected and used.

Thus, the light receiving portion 80 and the electronic component 20 are not electrically connected, and information is transmitted between the light receiving portion 80 and the electronic component 20 by the optical signal.

As described above, the configuration of the present disclosure makes effective use of space other than the power generation region that exists in the cell to prevent a reduction in volumetric energy density due to a reduction in the power generation region even when the electronic components are arranged in the cell unit.

The cell unit of this embodiment described above may be a lithium-ion battery in the aspect described below.
(1) A lithium-ion battery having a cell including a positive electrode current collector, a positive electrode active material layer, a separator, a negative electrode active material layer and a negative electrode current collector which are laminated on one another in this order,
   wherein a frame member is included that is arranged between the positive electrode current collector and the negative electrode current collector to seal the positive electrode active material layer, the separator, and the negative electrode active material layer, and
   an electronic component for detecting the state inside the cell is arranged in the frame member.
(2) The lithium-ion battery according to (1), wherein the electronic component is a sensor that measures temperature, voltage, current, or acoustic emission at a predetermined portion in the cell.
(3) The lithium-ion battery according to (1) or (2), wherein the electronic components are arranged at a plurality of locations inside the frame member provided in the outer periphery of the cell, and
   the states at different portions in the cell are detected individually.
(4) The lithium-ion battery according to any of (1) to (3), wherein the electronic component is electrically connected to the negative electrode current collector and the positive electrode current collector, and receive power supplied from a lithium-ion battery.
(5) The lithium-ion battery according to (4), wherein the negative electrode current collector and the positive electrode current collector are resin current collectors, and the negative electrode current collector and the positive electrode current collector are directly bonded and electrically connected to the electronic component.
(6) The lithium-ion battery according to any of (1) to (5), wherein the frame member is provided with a through hole for arranging the electronic component, the electronic component is arranged in the through hole, and the thickness of the frame member and the height of the electronic component are substantially the same.
(7) The lithium-ion battery according to any of (1) to (5), wherein a wiring board is provided within the frame member, and the electronic component is mounted on the wiring board.
(8) The lithium-ion battery according to (7), wherein other electronic component for controlling the current and/or voltage supplied to the electronic component is mounted on the wiring board.
(9) The lithium-ion battery according to any of (1) to (8), wherein the electronic component wirelessly outputs a signal indicating the state inside the cell to the outside of the cell.
(10) The lithium-ion battery according to any of (1) to (9), comprising:
   a laminated battery in which a plurality of the cells is laminated;
   wherein the state of each of the cells constituting the laminated battery is individually detected by the electronic components arranged within the frame member
(11) The lithium-ion battery according to any of (1) to (9), comprising:
   a battery module in which a plurality of laminated batteries in which a plurality of the cells are laminated are combined;
   wherein the state of each of the laminated batteries constituting the battery module is individually detected by the electronic component arranged within the frame member.
(12) The lithium-ion battery according to any of (1) to (11), comprising:
   a switch that switches whether or not the state inside the cell is detected by the electronic component arranged in the frame member;
   wherein the state inside the cell is detected by switching the switch when a signal is given from the outside.
(13) A method for determining the deterioration of the lithium-ion battery using the lithium-ion battery according to any of (1) to (12), wherein:
   the electronic component arranged in the frame member is a sensor for measuring potential transition at the time of charging, and
   the sensor monitors the potential transition and required time at the time of charging, and if the potential rise occurs in a shorter time than normal, it is determined that deterioration has occurred in the part within the cell measured by the sensor.
(14) The method for determining the deterioration of the lithium-ion battery using the lithium-ion battery according to any of (1) to (12), wherein:
   electronic components are arranged at a plurality of locations in the frame member provided on the outer periphery of the cell, and
   the electronic component is a sensor that measures potential, detects potential variations in different parts in the cell, and determines that the cell has deteriorated when the potential variation exceeds a predetermined value.

As described above, the cell unit according to an embodiment is a cell unit including a positive electrode current collector, a positive electrode active material layer, a separator, a negative electrode active material layer and a negative electrode current collector which are laminated on one another, the cell unit comprising a frame member arranged between the positive electrode current collector and an opposing negative electrode current collector and fixing a peripheral edge portion of the separator, and an electronic component for detecting the state inside the cell unit, wherein the electronic component is arranged in a region between the positive electrode current collector and the negative electrode current collector, and the electronic component arranged in the region is electrically connected to the positive electrode current collector and the negative electrode current collector.

In the embodiment described above, the positive electrode current collector and the negative electrode current collector exhibit different outer edge shapes from each other; and a notch may be formed in the peripheral edge portion of the positive electrode current collector or the negative electrode current collector.

In the embodiment described above, the electronic component is disposed in the portion where the notch is formed, and a region that contributes to the power generation of the cell unit assuming that the notch is not formed and a region that contributes to the power generation of the cell unit when the notch is formed may be substantially the same.

In the embodiment described above, the portion in the electronic component where an integrated circuit is included may be disposed inside the notch, and on the surface of one of the positive electrode current collector or the negative electrode current collector.

In the embodiment described above, the electronic component comprises a main body portion comprising a substrate and an integrated circuit arranged on the substrate, wherein the main body portion may be placed, in plan view of the cell unit, on the exposed surface of either the positive electrode current collector or the negative electrode current collector, the surface exposed by the formation of the notch.

In the embodiment described above, the electronic component further comprising connection parts positioned on both sides of the main body part, the connection portion comprises a first portion extending in the lamination direction of the cell, and a second portion coupled to the first portion and extending in the surface direction of the cell, and the second portion may come into contact with the surface of the positive electrode current collector or the negative electrode current collector, so that the electronic component and a current collector are conductively connected to each other.

In the embodiment described above, the frame member is annually arranged on the outer peripheries of the positive electrode active material layer and the negative electrode active material layer, and to surround the outer periphery of the separator, and a rectangular notch formed in the positive electrode current collector or the negative electrode current collector and a rectangular notch formed in the frame member may have the same shape, and may be formed at the same position when viewed in the lamination direction of cell units.

In the embodiment described above, the electronic component may be disposed, when the cell unit is viewed in plan view, when without projecting from the outer edge of the positive electrode current collector or the negative electrode current collector outward in the surface direction, and along the outer edge of the positive electrode current collector or the negative electrode current collector.

In the embodiment described above, the electronic component may have a light-emitting element that outputs an optical signal based on the state inside the cell unit.

An assembled battery having a plurality of laminated cell units according to the embodiment described above is provided; the electronic component provided in a cell unite in the assembled battery and the electronic component provided in a cell unite adjacent to the cell unit are formed in the same position when viewed in the lamination direction of the cell units; and an optical waveguide may be provided so as to cover a light-emitting surface of the light-emitting element in the plurality of electronic components that outputs an optical signal.

The embodiments described above are for facilitating the understanding of the present disclosure, and thus are not for limiting interpretation of the present disclosure. Each element and its arrangement, materials, conditions, shapes, sizes, and the like provided by the embodiment are not limited to those exemplified, but can be changed as necessary. Further, the configurations shown in the different embodiments can be replaced partially or combined.

### Reference Signs List

- 10: Cell unit
- 14: Separator
- 15: Positive electrode active material layer
- 16: Negative electrode active material layer
- 17: Positive electrode current collector
- 17a: Notch of a positive electrode current collector
- 18: Frame member
- 18a: Notch of a frame member
- 19: Negative electrode current collector
- 19a: Exposed surface of the negative electrode current collector
- 20: Electronic component
- 21a: Wiring board
- 21b: Integrated circuit
- 21c: Integrated circuit
- 22: Light-emitting element
- 24: Measurement terminal
- 25: Measurement terminal
- 50: Assembled battery
- 60: Optical waveguide
- 70: Outer package
- 80: Light receiving portion
- A: Region

## Claims

1. A cell unit including a positive electrode current collector, a positive electrode active material layer, a separator, a negative electrode active material layer and a negative electrode current collector which are laminated on one another, the cell unit comprising:
a frame member arranged between the positive electrode current collector and an opposing negative electrode current collector and fixing a peripheral edge portion of the separator; and
an electronic component for detecting the state inside the cell unit,
wherein the electronic component is arranged in a region between the positive electrode current collector and the negative electrode current collector, and
the electronic component arranged in the region is electrically connected to the positive electrode current collector and the negative electrode current collector.

2. The cell unit according to claim 1, wherein:
the positive electrode current collector and the negative electrode current collector exhibit different outer edge shapes from each other; and
a notch is formed in the peripheral edge portion of the positive electrode current collector or the negative electrode current collector.

3. The cell unit according to claim 2, wherein the electronic component is disposed in the portion where the notch is formed, and
a region that contributes to the power generation of the cell unit assuming that the notch is not formed and a region that contributes to the power generation of the cell unit when the notch is formed are substantially the same.

4. The cell unit according to claim 2, wherein the portion in the electronic component where an integrated circuit is included is disposed inside the notch, and on the surface of one of the positive electrode current collector or the negative electrode current collector.

5. The cell unit according to claim 2 or 3, wherein the electronic component comprises:
a main body portion comprising a substrate and an integrated circuit arranged on the substrate,
wherein the main body portion is placed, in plan view of the cell unit, on the exposed surface of either the positive electrode current collector or the negative electrode current collector, the surface exposed by the formation of the notch.

6. The cell unit according to claim 5, wherein the electronic component further comprising connection parts positioned on both sides of the main body part,
the connection portion comprises a first portion extending in the lamination direction of the cell, and a second portion coupled to the first portion and extending in the surface direction of the cell, and
the second portion comes into contact with the surface of the positive electrode current collector or the negative electrode current collector, so that the electronic component and a current collector are conductively connected to each other.

7. The cell unit according to any one of claims 1 to 6, wherein the frame member is annually arranged on the outer peripheries of the positive electrode active material layer and the negative electrode active material layer, and to surround the outer periphery of the separator, and
a rectangular notch formed in the positive electrode current collector or the negative electrode current collector and a rectangular notch formed in the frame member have the same shape, and are formed at the same position when viewed in the lamination direction of cell units.

8. The cell unit according to any one of claims 1 to 7, wherein the electronic component is disposed, when the cell unit is viewed in plan view, when without projecting from the outer edge of the positive electrode current collector or the negative electrode current collector outward in the surface direction, and along the outer edge of the positive electrode current collector or the negative electrode current collector.

9. The cell unit according to any one of claims 1 to 8, wherein:
the electronic component has a light-emitting element that outputs an optical signal based on the state inside the cell unit.

10. A lithium-ion battery module, comprising an assembled battery having a plurality of laminated cell units according to any one of claims 1 to 9,
wherein the electronic component provided in a cell unite in the assembled battery and the electronic component provided in a cell unite adjacent to the cell unit are formed in the same position when viewed in the lamination direction of the cell units, and
an optical waveguide is provided so as to cover a light-emitting surface of the light-emitting element in the plurality of electronic components that outputs an optical signal.
